# EUROPÄISCHE PATENTSCHRIFT

(11) **EP 2 577 038 B1**
(45) Veröffentlichungstag und Bekanntmachung des Hinweises auf die Patenterteilung: **24.01.2018**
(21) Anmeldenummer: 11715474.0
(22) Anmeldetag: 13.04.2011
(51) Int. Cl.: F02D 41/22, F02D 41/26, G01M 15/04, F02M 65/00, F02D 41/20

(54) **VORRICHTUNG ZUM PRÜFEN VON KRAFTSTOFFINJEKTOREN SOWIE ENTSPRECHENDES VERFAHREN**
DEVICE FOR TESTING FUEL INJECTORS, AND CORRESPONDING METHOD
DISPOSITIF DE CONTRÔLE D'INJECTEURS DE CARBURANT ET PROCÉDÉ CORRESPONDANT

(30) Priorität: 31.05.2010 DE 102010029493
(43) Veröffentlichungstag der Anmeldung: 10.04.2013
(73) Patentinhaber: Robert Bosch GmbH, 70442 Stuttgart (DE)
(72) Erfinder: FRIEDMANN, Jochen, 73230 Kirchheim (DE); GOESER, Joachim, 73072 Donzdorf (DE); KUTTERUF, Karl-Martin, 73272 Neidlingen (DE); VOGEL, Markus, 73095 Albershausen (DE)
(86) Internationale Anmeldenummer: PCT/EP2011/055818
(87) Internationale Veröffentlichungsnummer: WO 2011/151097

(56) Entgegenhaltungen:
- EP-A2- 1 746 277
- DE-A1-102008 004 278
- GB-A- 2 393 217
- GB-A- 2 425 571

## Beschreibung

### Stand der Technik

Die Erfindung betrifft eine Vorrichtung zum Prüfen von Kraftstoffinjektoren, insbesondere vom Piezotyp sowie ein entsprechendes Verfahren zum Prüfen von Kraftstoffinjektoren. Kraftstoffinjektoren werden beispielsweise in Kraftstoffeinspritzeinlagen in Kraftfahrzeugen eingesetzt. Um diese bei ihrer Herstellung oder auch während eines späteren Werkstattaufenthalts überprüfen zu können, werden jeweils speziell angepasste Prüfgeräte eingesetzt, die jeweils spezifisch auf den bestimmten Kraftstoffinjektortyp angepasst sind. Die Überprüfung mancher speziellen Typen von Kraftstoffinjektoren, beispielsweise Piezo-Kraftstoffinjektoren vom Subtyp "Aktiv low", also Piezo-Kraftstoffinjektoren, bei denen ein Einspritzventil bei einer anliegenden Betriebsspannung geschlossen ist (Einspritzung von Kraftstoff in einen Zylinder ist unterbrochen) ist überhaupt nur während der Herstellung und auch nur von einzelnen Komponenten des entsprechenden Kraftstoffinjektors möglich.

Aus der DE 10 2007 038 537 A1 ist ein Prüfgerät und ein Verfahren zur Prüfung eines Aktors eines Kraftstoffinjektors bekannt geworden, wobei der Kraftstoffinjektor ein Piezo-Kraftstoffinjektor ist. Dabei wird eine Prüfspannung in Stufen oder stufenlos an den Kraftstoffinjektor angelegt und anschließend eine Erfassung eines sich während der Änderung der Prüfspannung einstellenden Verlaufs einer elektrischen Größe eines Gesamtwiderstandes des Kraftstoffinjektors gemessen.

Weitere Vorrichtungen und Verfahren zum Rüfen von Kraftstoff injektoren sind aus den Dokumenten DE 10 2008 004278 A1, EP 1 746 277 A2 und GB 2393 217 A bekannt.

### Offenbarung der Erfindung

Die in Anspruch 1 definierte Vorrichtung zum Prüfen von Kraftstoffinjektoren, insbesondere vom Piezotyp, umfasst zumindest eine insbesondere bidirektionale

Schnittstelle zum Anschließen eines Bediengeräts, zumindest einen Ausgang zum Anschließen zumindest eines Kraftstoffinjektors, zumindest einen integrierten Schaltkreis sowie einen Mikrocontroller zur Steuerung des integrierten Schaltkreises, wobei der integrierte Schaltkreis und der Mikrocontroller derart zusammenwirken, sodass der Kraftstoffinjektor in Abhängigkeit seines Typs und/oder Subtyps überprüfbar ist, umfassend zumindest den Typ Piezo mit Subtypen Aktiv high und Aktiv low.

Piezo-Kraftstoffinjektoren, bei denen ein Einspritzventil des Piezo-Kraftstoffinjektors bei einer anliegenden Betriebsspannung geschlossen ist (Einspritzung von Kraftstoff in einen Zylinder ist unterbrochen) sind hier in der Beschreibung und insbesondere in den Ansprüchen als "Aktiv low" bezeichnet. Piezo-Kraftstoffinjektoren, bei denen ein Einspritzventil des Piezo-Kraftstoffinjektors bei einer anliegenden Betriebsspannung offen ist (Einspritzung von Kraftstoff in einen Zylinder erfolgt) sind hier in der Beschreibung und insbesondere in den Ansprüchen als "Aktiv high" bezeichnet.

Das in Anspruch 9 definierte Verfahren zum Prüfen von Kraftstoffinjektoren, insbesondere vom Piezotyp, insbesondere geeignet zur Durchführung auf einer Vorrichtung gemäß zumindest einem der Ansprüche 1-8, umfasst die Schritte Anschließen eines Kraftstoffinjektors zur Überprüfung an eine Vorrichtung zum Prüfen, Erkennen des Typ und/oder Subtyps des Kraftstoffinjektors, umfassend zumindest die Subtypen Aktiv high und Aktiv low, Prüfen des Kraftstoffinjektors entsprechend dem Typ und/oder Subtyp des Kraftstoffinjektors, Bereitstellen eines Ergebnisses des geprüften Kraftstoffinjektors.

### Vorteile der Erfindung

Die in Anspruch 1 definierte Vorrichtung zum Prüfen von Kraftstoffinjektoren sowie das in Anspruch 9 definierte entsprechende Verfahren weisen die Vorteile auf, dass eine kostengünstige Überprüfung einer Vielzahl von Kraftstoffinjektoren ermöglicht wird. Gleichzeitig sinkt der Platzbedarf insgesamt für eine derartige Vorrichtung, da mit dieser Vorrichtung keine zusätzlichen Geräte für jeden einzelnen Kraftstoffinjektortyp bzw. - subtyp bereitgehalten werden müssen. Schließlich wird die Anwendung bzw. die Durchführung des Prüfens des Kraftstoffinjektors vereinfacht, weil ein Bediener lediglich eine einzelne Vorrichtung bedienen bzw. ein Verfahren für unterschiedliche Typen und Subtypen von Kraftstoffinjektoren anwenden muss. Ebenso wird der Verkabelungsaufwand für einen Anschluss verschiedener Kraftstoffinjektoren gesenkt. Erfindungsgemäß ist der Ausgang zum Anschließen eines mechanisch und/oder elektrisch kodierten Steckers einer Leitung für einen Kraftstoffinjektor ausgebildet. Der Vorteil hierbei ist, dass damit zum einen eine zuverlässige und eindeutige Erkennung des Typs bzw. Subtyps des Kraftstoffinjektors ermöglicht wird, zum anderen wird auf diese Weise durch die entsprechende Ausbildung des Ausgangs, beispielsweise mittels entsprechender Kontakte, die in entsprechende Kontakte des Steckers eingreifen, eine einfache Erkennung des angeschlossenen Kraftstoffinjektortyps bzw. -subtyps ermöglicht. Erfindungsgemäß wirkt der Ausgang mit dem Mikrocontroller und/oder dem integrierten Schaltkreis zur automatischen Erkennung des Typs und/oder Subtyps des Kraftstoffinjektors zusammen. Der Vorteil hierbei ist, dass ohne zusätzliche Eingriffe von außen, beispielsweise mittels eines entsprechenden Umschalters, etc. der angeschlossene Kraftstoffinjektortyp bzw. -subtyp erkannt wird, so dass im Folgenden der Mikrocontroller und/oder der integrierte Schalkreise sofort mit dem Prüfen des angeschlossenen Kraftstoffinjektors beginnen kann. Eine Überprüfung eines Kraftstoffinjektors wird damit vereinfacht und beschleunigt.

Gemäß einer weiteren vorteilhaften Weiterbildung der Erfindung umfasst der integrierte Schaltkreis eine Lade- und eine Entladeschaltung. Der Vorteil hierbei ist, dass auf einfache und zuverlässige Weise Kraftstoffinjektoren vom Piezotyp mit Subtypen Aktiv high und Aktiv low mittels der Vorrichtung überprüft werden können.

Gemäß einer weiteren vorteilhaften Weiterbildung der Erfindung ist die Lade- und Entladeschaltung für mehrere Lade- und Entladevorgänge ausgebildet und umfasst insbesondere einen Puffer-Kondensator. Der Vorteil hierbei ist, dass damit das Laden eines Piezo-Kraftstoffinjektors aus dem Puffer-Kondensator erfolgen kann und bei dessen Entladen die Ladung direkt in den Puffer-Kondensator zurückgeführt werden kann. Der Puffer-Kondensator ist, dabei insbesondere um mehrere Lade- und Entladevorgänge zu ermöglichen, mit einer Kapazität versehen, welche deutlich über der Kapazität des Piezo-Kraftstoffinjektors liegt.

Gemäß einer weiteren vorteilhaften Weiterbildung der Erfindung umfasst der integrierte Schaltkreis einen Gleichstromspannungswandler. Der Vorteil hierbei ist, dass damit auf einfache und zuverlässige Weise eine Spannung an dem Puffer-Kondensator erhöht werden kann, so dass der Puffer-Kondensator schnell aufgeladen werden kann und so für eine Prüfung von Kraftstoffinjektoren zur Verfügung steht.

Gemäß einer weiteren vorteilhaften Weiterbildung der Erfindung sind Mittel zur Isolationsmessung des Kraftstoffinjektors angeordnet. Der Vorteil hierbei ist, dass damit auf einfache kostengünstige und zuverlässige Weise eine Bewertung des Isolationswiderstandes eines Aktors des Kraftstoffinjektors und damit des Kraftstoffinjektors insgesamt möglich ist. Liegt beispielsweise der Messwert des Isolationswiderstandes des Aktors des Kraftstoffinjektors außerhalb eines vorgegebenen Toleranzbereichs, kann der Kraftstoffinjektor direkt ausgesondert werden und muss nicht zusätzlich durch entsprechende Betätigung des Kraftstoffinjektors geprüft werden.

Gemäß einer weiteren vorteilhaften Weiterbildung der Erfindung sind Mittel zur Dichtheitsprüfung des Kraftstoffinjektors angeordnet. Der Vorteil hierbei ist, dass auch Kraftstoffinjektoren mit Magnetventilen insbesondere auf Dichtheit überprüft werden können. Dies erhöht die Flexibilität der Vorrichtung bzw. des Verfahrens. Bei der Dichtheitsprüfung wird eine Leckage des Kraftstoffinjektors im betätigten und unbetätigten Zustand gemessen. Tritt während der unbetätigten Phase eine Leckage auf, ist der Kraftstoffinjektor undicht und wird ausgetauscht.

Gemäß einer weiteren vorteilhaften Weiterbildung des Verfahrens erfolgt das Erkennen des Typs und/oder Subtyps des Kraftstoffinjektors mittels einer mechanischen und/oder elektrischen Kodierung. Der Vorteil hierbei ist, dass damit auf einfache und kostengünstige Weise das Erkennen des jeweiligen Typs und/oder Subtyps des Kraftstoffinjektors ermöglicht wird.

### Kurze Beschreibung der Zeichnungen

Ausführungsbeispiele der Erfindung sind in der Zeichnung dargestellt und in der nachfolgenden Beschreibung näher erläutert. Es zeigen:
- Fig. 1: eine Vorrichtung zum Prüfen von Kraftstoffinjektoren gemäß einer ersten Ausführungsform der vorliegenden Erfindung, und
- Fig. 2: ein Ablaufdiagramm eines Verfahrens gemäß der ersten Ausführungsform der vorliegenden Erfindung.

### Beschreibung von Ausführungsbeispielen

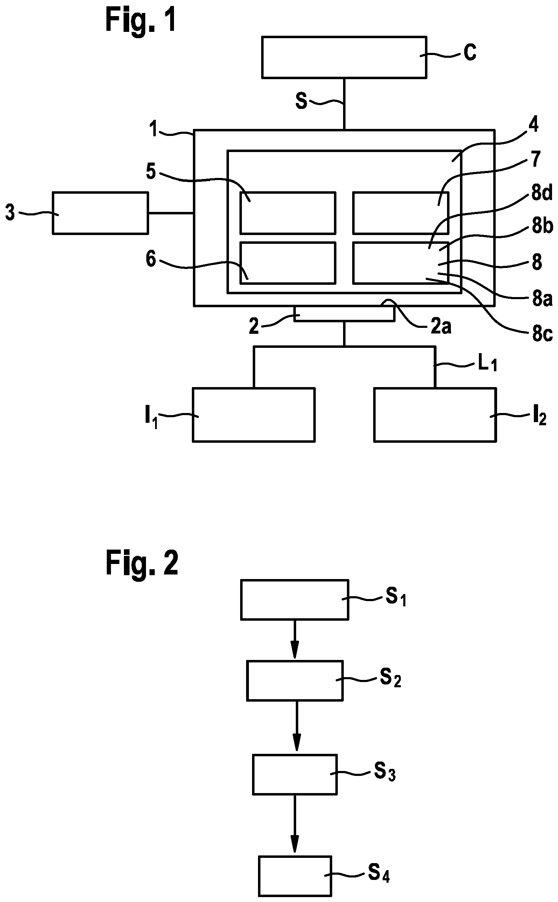

Fig. 1 zeigt eine Vorrichtung zum Prüfen von Kraftstoffinjektoren mit einer ersten Ausführungsform der vorliegenden Erfindung.

In Fig. 1 bezeichnet Bezugszeichen 1 eine Vorrichtung zum Prüfen von Piezo-Kraftstoffinjektoren. An die Vorrichtung 1 ist zum einen über eine bidirektionale Schnittstelle S ein Bediengerät in Form eines Computers C angeschlossen. Weiterhin ist eine Energiequelle 3 zum Betrieb der Vorrichtung 1 an diese angeschlossen. Die Vorrichtung 1 umfasst weiter einen Ausgang 2a, der zum Anschließen eines mechanisch und elektrisch kodierten Steckers 2 einer Leitung L₁ für zwei Kraftstoffinjektoren I₁, I₂ ausgebildet ist. Der Stecker 2 und entsprechend korrespondierender Anschluss 2a mit Leitung L₁ können dabei zum Anschluss von Kraftstoffinjektoren I₁, I₂ vom Piezotyp und/oder vom Magnettyp dienen. Der Anschluss 2a wirkt dabei mit einem Prüfmodul 6 zusammen, welches die entsprechende mechanische und elektrische Kodierung des Steckers 2 mittelbar erkennt und welches mit einem Mikrocontroller 5 zusammenwirkt, so dass ein integrierter Schaltkreis 8 zur Überprüfung des angeschlossenen Kraftstoffinjektors I₁, I₂ derart gesteuert wird, entsprechend des erkannten Typs und Subtyps des Kraftstoffinjektors I₁, 1₂. Des Weiteren umfasst die Vorrichtung 1 ein Aktor-Prüfmodul 7, welches zur Prüfung eines Aktors des Kraftstoffinjektors I₁, I₂ bezüglich Phasendurchschlag dient. Das Aktor-Prüfmodul 7 überprüft dabei einen Innenwiderstand des angeschlossenen Piezo-Kraftstoffinjektors I₁, I₂. Anhand der bei der Prüfung mittels des Aktor-Prüfmoduls 7 ermittelten Werte des Innenwiderstandes des Piezo-Kraftstoffinjektors I₁, I₂ wird entschieden, ob der Piezo-Kraftstoffinjektor I₁, I₂ beschädigt ist.

Der Mikrocontroller 5, das Prüfmodul 6, das Aktor-Prüfmodul 7 sowie der integrierte Schaltkreis 8 sind innerhalb der Prüfvorrichtung 1 auf einer gemeinsamen Leiterplatte 4 angeordnet. Weiterhin umfasst der integrierte Schaltkreis 8 Mittel 8a zur Dichtheitsprüfung von Magnetventilen, Mittel 8b zur Qualitätsbestimmung von Piezo-Kraftstoffinjektoren, Mittel 8c zur Isolationsmessung von Piezo-Kraftstoffinjektoren sowie eine entsprechende Lade- und Entladeschaltung 8d für die Überprüfung von Piezo-Kraftstoffinjektoren I₁, I₂.

Der Mikrocontroller 5 dient zur Generierung von unterschiedlichen Ansteuerverläufen für Kraftstoffinjektoren I₁, I₂ unterschiedlichen Typs und Subtyps. Gleichzeitig umfasst dieser auch Mittel zur Wandlung von digitalen Signalen in analoge Stromverläufe für die jeweiligen Kraftstoffinjektoren I₁, I₂. Das Ergebnis einer Prüfung eines an die Vorrichtung 1 angeschlossenen Kraftstoffinjektors I₁, I₂ wird von der Vorrichtung 1 über die Schnittstelle S an den Computer C übertragen. Über die Schnittstelle S werden auch Informationen zur Erzeugung von Ansteuerverläufen für den bzw. die jeweils an die Vorrichtung 1 angeschlossenen Kraftstoffinjektoren I₁, I₂ zur Verfügung gestellt. Gleichzeitig ist damit auch eine Anzeige von Diagnose- und Fehlermeldungen der Vorrichtung 1 möglich. Die Kommunikation zwischen Vorrichtung 1 und Computer C kann dabei beispielsweise mittels RS232 mit Textprotokoll erfolgen.

Fig. 2 zeigt ein Ablaufdiagramm eines Verfahrens gemäß der ersten Ausführungsform der vorliegenden Erfindung.

In Fig. 2 bezeichnet Bezugszeichen S₁ ein Anschließen eines Kraftstoffinjektors zur Überprüfung an eine Vorrichtung 1. Anschließend erfolgt ein Erkennen S₂ des Typs und/oder Subtyps des Kraftstoffinjektors I₁, I₂, umfassend zumindest die Subtypen Aktiv high und Aktiv low. Anschließend erfolgt in einem weiteren Schritt ein Prüfen S₃ des Kraftstoffinjektors I₁, I₂ entsprechend dem Typ und/oder Subtyp des Kraftstoffinjektors I₁, I₂ und in einem weiteren Schritt S₄ ein Bereitstellen eines Ergebnisses des geprüften Kraftstoffinjektors I₁, I₂.

Obwohl die vorliegende Erfindung vorstehend anhand bevorzugter Ausführungsbeispiele beschrieben wurde, ist sie nicht darauf beschränkt, sondern auf vielfältige Weise modifizierbar, wie in den beigefügten Ansprüchen definiert.

## Patentansprüche

1. Vorrichtung (1) zum Prüfen von Kraftstoffinjektoren (I₁, I₂), insbesondere vom Piezotyp, umfassend
zumindest eine insbesondere bidirektionale Schnittstelle (S) zum Anschließen eines Bediengeräts (C),
zumindest einen Ausgang (2a) zum Anschließen zumindest eines Kraftstoffinjektors (I₁, I₂), wobei der Ausgang (2a) zum Anschließen eines mechanisch und/oder elektrisch kodierten Steckers (2) einer Leitung (L₁) des zumindest einen Kraftstoffinjektor (I₁, I₂) ausgebildet ist.
zumindest einen integrierten Schaltkreis (8) sowie einen Mikrocontroller (5) zur Steuerung des integrierten Schaltkreises (8),
wobei der integrierte Schaltkreis (8) und der Mikrocontroller (5) derart zusammenwirken, dass der Kraftstoffinjektor (I₁, I₂) in Abhängigkeit seines Typ und/oder Subtyps überprüfbar ist, umfassend zumindest den Typ Piezo mit Subtypen "Aktiv high" und "Activ low", wobei bei Kraftstoffinjektoren des Subtyp "Aktiv high" ein Einspritzventil bei anliegender Betriebsspannung offen ist, und bei Kraftstoffinjektoren des Subtyp "Aktiv low" ein Einspritzventil bei einer anliegenden Betriebsspannung geschlossen ist,
**dadurch gekennzeichnet, dass** der Ausgang (2a) mit einem Prüfmodul (6) und mit dem Mikrocontroller (5) und dem integrierten Schaltkreis (8) zur automatischen Erkennung des Typs und/oder Subtyps des Kraftstoffinjektors (I₁, I₂) zusammenwirkt und das Erkennen mittels einer mechanischen und/oder elektrischen Kodierung erfolgt.

2. Vorrichtung gemäß zumindest Anspruch 1, wobei
der integrierte Schaltkreis (8) eine Lade- und eine Entladeschaltung (8d) umfasst.

3. Vorrichtung gemäß zumindest Anspruch 1, wobei
die Lade- und Entladeschaltung (8d) für mehrere Lade- und Entladevorgänge, ausgebildet ist, und insbesondere einen Puffer-Kondensator (P) umfasst.

4. Vorrichtung gemäß zumindest Anspruch 1 oder 3, wobei
der integrierte Schaltkreis (8) einen Gleichstromspannungswandler umfasst.

5. Vorrichtung gemäß zumindest Anspruch 1, wobei
Mittel zur Isolationsmessung (8c) des Kraftstoffinjektors (I₁, I₂) angeordnet sind.

6. Vorrichtung gemäß zumindest Anspruch 1, wobei
Mittel zur Dichtheitsprüfung (8b) des Kraftstoffinjektors (I₁, I₂) angeordnet sind.

7. Verfahren zum Prüfen von Kraftstoffinjektoren (I₁, I₂), insbesondere vom Piezotyp, zur Durchführung auf einer Vorrichtung gemäß zumindest einem der Ansprüche 1-6, umfassend die Schritte
Anschließen (S₁) eines Kraftstoffinjektors (I₁, I₂) zur Überprüfung an eine Vorrichtung (1) zum Prüfen,
Erkennen (S₂) des Typ und/oder Subtyps des Kraftstoffinjektors (I₁, I₂), umfassend zumindest die Subtypen Aktiv high und Aktiv low
Prüfen (S₃) des Kraftstoffinjektors (I₁, I₂) entsprechend dem Typ und/oder Subtyp des Kraftstoffinjektors (I₁, I₂),
Bereitstellen (S₄) eines Ergebnisses des geprüften Kraftstoffinjektors (I₁, I₂), **dadurch gekennzeichnet, dass** das Erkennen (S₂) des Typs und/oder Subtyps des Kraftstoffinjektors (I₁, I₂) mittels einer mechanischen und/oder elektrischen Kodierung (2) erfolgt.

## Claims

1. Device (1) for testing fuel injectors (I₁, I₂, in particular of the piezo type, comprising
at least one, in particular, bidirectional interface (S) for connecting an operator control unit (C),
at least one output (2a) for connecting at least one fuel injector (I₁, I₂), wherein the output (2a) is designed to connect a mechanically and/or electrically encoded plug (2) of a line (L₁) of the at least one fuel injector (I₁, I₂),
at least one integrated circuit (8) and a microcontroller (5) for controlling the integrated circuit (8), wherein the integrated circuit (8) and the microcontroller (5) interact in such a way that the fuel injector (I₁, I₂) can be checked as a function of its type and/or subtype, comprising at least the piezo type with subtypes "active high" and "active low", wherein in the case of fuel injectors of the subtype "active high" an injection valve is open when an operating voltage is applied, and in the case of fuel injectors of the subtype "active low" an injection valve is closed when an operating voltage is applied,
**characterized in that** the output (2a) interacts with a test module (6) and with the microcontroller (5) and the integrated circuit (8) to automatically detect the type and/or subtype of the fuel injector (I₁, I₂), and the detection is carried out by means of mechanical and/or electrical encoding.

2. Device according to at least Claim 1, wherein the integrated circuit (8) comprises a charging and a discharging circuit (8d).

3. Device according to at least Claim 1, wherein the charging and discharging circuit (8d) is designed for a plurality of charging and discharging processes, and in particular comprises a buffer capacitor (P).

4. Device according to at least Claim 1 or 3, wherein the integrated circuit (8) comprises a DC voltage converter.

5. Device according to at least Claim 1, wherein means for measuring (8c) the insulation of the fuel injector (I₁, I₂) are arranged.

6. Device according to at least Claim 1, wherein means for testing (8b) the leakproofness of the fuel injector (I₁, I₂) are arranged.

7. Method for testing fuel injectors (I₁, I₂), in particular of the piezo type, for execution on a device according to at least one of Claims 1-6, comprising the steps
connecting (S₁) a fuel injector (I₁, I₂) for checking to a device (1) for testing,
detecting (S₂) the type and/or subtype of the fuel injector (I₁, I₂), comprising at least the subtypes active high and active low
testing (S₃) the fuel injector (I₁, I₂) in accordance with the type and/or subtype of the fuel injector (I₁, I₂).
making available (S₄) a result of the tested fuel injector (I₁, I₂),
**characterized in that** the detection (S₂) of the type and/or subtype of the fuel injector (I₁, I₂) is carried out by means of mechanical and/or electrical encoding (2).

## Revendications

1. Dispositif (1) pour le contrôle d'injecteurs de carburant (I₁, I₂), en particulier du type piézo, comprenant
au moins une interface (S) en particulier bidirectionnelle pour le raccordement d'un appareil de commande (C),
au moins une sortie (2a) pour le raccordement d'au moins un injecteur de carburant (I₁, I₂), dans lequel la sortie (2a) est configurée pour le raccordement d'un connecteur à codage mécanique et/ou électrique (2) d'une conduite (L₁) dudit au moins un injecteur de carburant (I₁, I₂),
au moins un circuit intégré (8) ainsi qu'un microcontrôleur (5) pour la commande du circuit intégré (8),
dans lequel le circuit intégré (8) et le microcontrôleur (5) coopèrent de telle manière que l'injecteur de carburant (I₁, I₂) puisse être contrôlé en fonction de son type et/ou de son sous-type, comprenant au moins le type piézo avec des sous-types "Actif haut" et "Actif bas", dans lequel dans des injecteurs de carburant du sous-type "Actif haut" la soupape d'injection est ouverte lorsqu'une tension de fonctionnement est présente, et dans des injecteurs de carburant du type "Actif bas" une soupape d'injection est fermée lorsqu'une tension de fonctionnement est présente,
**caractérisé en ce que** la sortie (2a) coopère avec un module de contrôle (6) et avec le microcontrôleur (5) et le circuit intégré (8) pour l'identification automatique du type et/ou du sous-type de l'injecteur de carburant (I₁, I₂) et l'identification est effectuée au moyen d'un codage mécanique et/ou électrique.

2. Dispositif selon au moins la revendication 1, dans lequel le circuit intégré (8) comprend un circuit de charge et un circuit de décharge (8d).

3. Dispositif selon au moins la revendication 1, dans lequel le circuit de charge et de décharge (8b) est conçu pour plusieurs opérations de charge et de décharge, et comprend en particulier un condensateur tampon (P).

4. Dispositif selon au moins la revendication 1 ou 3, dans lequel le circuit intégré (8) comprend un convertisseur de tension en courant continu.

5. Dispositif selon au moins la revendication 1, dans lequel sont disposés des moyens pour la mesure de l'isolation (8c) de l'injecteur de carburant (I₁, I₂).

6. Dispositif selon au moins la revendication 1, dans lequel sont disposés des moyens pour le contrôle de l'étanchéité (8b) de l'injecteur de carburant (I₁, I₂).

7. Procédé pour le contrôle d'injecteurs de carburant (I₁, I₂), en particulier du type piézo, pour la mise en oeuvre d'un dispositif selon au moins une des revendications 1 à 6, comprenant les étapes suivantes:
raccorder (S₁) un injecteur de carburant (I₁, I₂) à contrôler à un dispositif de contrôle (1),
identifier (S₂) le type et/ou le sous-type de l'injecteur de carburant (I₁, I₂), comprenant au moins les sous-types "Actif haut" et "Actif bas",
contrôler (S₃) l'injecteur de carburant (I₁, I₂) selon le type et/ou le sous-type de l'injecteur de carburant (I₁, I₂),
fournir (S₄) un résultat de l'injecteur de carburant contrôlé (I₁, I₂),
**caractérisé en ce que** l'on effectue l'identification (S₂) du type et/ou du sous-type de l'injecteur de carburant (I₁, I₂) au moyen d'un codage mécanique et/ou électrique (2).
